# EUROPEAN PATENT APPLICATION

(11) **EP 4 678 310 A1**
(43) Date of publication of application: **14.01.2026**
(21) Application number: 24461594.4
(22) Date of filing: 12.07.2024
(51) Int. Cl.: B22F 9/08, B23K 26/03, B23K 26/06, B23K 26/082, B33Y 10/00, B33Y 30/00, B33Y 50/00, B22F 9/04

(54) **METHOD, DEVICE, AND COMPUTER PROGRAM PRODUCT FOR ULTRASONIC TREATMENT OF MATERIAL BEING PROCESSED**

(71) Applicant: AMAZEMET SPOLKA Z ORGANICZONA ODPOWIEDZIALNOSCIA, 00-867 Warszawa (PL)
(72) Inventor: ZRODOWSKI, Lukasz, 02-647 Warszawa (PL); ZADROGA, Patryk, 04-212 Warszawa (PL)
(74) Representative: Bury & Bury

(57) **Abstract**

A method of ultrasonic processing of a workpiece material (**104**), in which the workpiece material (**104**) is simultaneously subjected to ultrasonic vibrations by means of an ultrasonic vibrating element (**101**) and melted by means of a focused radiation source (**140**). The melting comprises performing, simultaneously or alternately, the steps of directing (**210**) a radiation beam (**139**) originating from the radiation source (**140**) toward a specific location in a processing area (**300**) of the workpiece material (**104**) and/or the ultrasonic element (**101**) and supplying energy (**220**) to the processing area by means of the focused radiation beam (**139**). The step of supplying energy (**220**) is synchronized with the step of directing (**210**) to obtain melting lines arranged in a predefined pattern on the processing area (**300**). The distribution of the energy density supplied to the processing area (**300**) is defined by the density of the melting lines in the pattern used, and/or changing the speed of the radiation beam movement, and/or changing the parameters of the laser source. The subject of the invention is also a device for carrying out this method and a computer program product for automatic implementation of the method.

## Description

### Field of the invention

The invention concerns a method of ultrasonic processing, in particular atomization, of a processed material, a device for carrying out this method and a computer program product for this purpose.

### State of the art

Powdered materials, in particular fusible materials, and especially metals, are used in numerous fields, including the paint industry and 3D printing. The production of high-quality metal powders is a challenging task.

In the state of the art, solutions are known that use ultrasonic frequency vibrations to process liquid metals. Typical applications include powder atomization and metal alloying. Typically, the ultrasonic system is excited by a piezoelectric or magnetostrictive transducer.

From the publication WO2022034517, an ultrasonic system is known designed for operation at high temperature, comprising one or more ultrasonic transducers and characterized in that the waveguide is placed orthogonal to the axis of the one or more ultrasonic transducers and is made of a fiber composite, the fibers of which consist of carbon or silicon carbide and whose dominant direction is orthogonal to the transducer axis, and the matrix consists of a ceramic material.

The laser atomization method is presented in S. Habib Alavi et al., "Ultrasonic vibration-assisted laser atomization of stainless steel," Powder Technology 2017" and S. Habib Alavi et al., "Melt expulsion during ultrasonic vibration-assisted laser surface processing of austenitic stainless steel," Ultrasonics 2015. The atomization occurs by atomizing the sonotrode material melted by a laser beam. In this case, the laser acts as a heat source used for laser melting, and mechanical energy is supplied by means of a sonotrode excited by a piezoelectric transducer. This document identifies the problem of pitting and destruction of the sonotrode due to so-called drilling with a static radiation beam. Laser melting is understood as a phase transition of the workpiece material from a solid to a liquid under the influence of laser radiation, even if it is accompanied by additional effects, e.g. chemical decomposition of the material, evaporation, or boiling of the material. A known unfavorable phenomenon is the formation of a vapor channel inside the laser pool, where the material evaporates, while the edge of the laser pool remains in a liquid state.

From the publication EP4000763, an ultrasonic metal atomizer is known, comprising a piezoelectric transducer, an ultrasonic signal generator, and an elongated, consumable sonotrode subjected in the working chamber to the impact of a movable and electronically controlled heat source for melting the material to be atomized. An electron gun or alternatively a laser is indicated as the heat source. The heat source is moved along a consumable sonotrode.

From publication US3275787 it is known to use an electron beam to melt vibrating metal in a vacuum chamber. Six systems are described that use a heat source in the form of an electron beam and a vibrating element used in the atomization process.

### Problem to be solved

A problem in using a laser as a heat source for melting atomized metal is a small size of the melted pool. As a result, the processed metal material is consumed unevenly. Moving the pool only partially solves this problem due to expulsions from the pool and formation of the deposits. To obtain a power density that allows to melt the material, it is necessary to use very high power or highly focus the laser beam. High-power lasers are difficult to operate and cool and difficult to manufacture. Therefore, lower-power lasers with a focused beam are used. This results in a small size of the pool and aforementioned problems. This problem does not necessarily occur when using an electron beam, because achieving high electron beam powers is a technological challenge that is well understood, and systems with a power of the order of megawatts are available on the market. Small size of the pool results in two unfavorable effects.

Firstly, liquid material from the pool spreads out to the sides due to sonotrode vibrations. As a result, deposits of solidified material are formed around the pool.

Secondly, the ultrasonic element on which the small pool is formed is consumed unevenly due to the removal of liquid material from the pool by atomization. As a result, effective laser drilling occurs in the ultrasonic element and pits are formed.

The combination of these two phenomena gives a rather random distribution of deposits and pits and is difficult to compensate for, and consequently leads to excessive material consumption and a risk of damaging the working chamber with the laser beam.

Both phenomena negatively affect the stability of the atomization process and prevent continuous operation with high process efficiency. Pitting is particularly dangerous when using a sonotrode made of a different material than the workpiece material, because contamination occurs, which is disqualifying for the process. The deposit formation and pitting are stochastic phenomena, and the risk of their occurrence increases with the increase in process efficiency, i.e. the increase in energy supplied to the sonotrode and the feeding rate of the workpiece material.

### Summary of the invention

The subject of the invention is a method of ultrasonic processing of a workpiece material, in which the workpiece material is simultaneously subjected to ultrasonic vibrations by means of a vibrating ultrasonic element, and melted by means of a focused radiation source. Said melting comprises performing, simultaneously or alternately, the following steps: a step of directing a radiation beam originating from the radiation source toward a specific location in a processing area of the workpiece material and/or the ultrasonic element, and a step of supplying energy to the processing area by means of the focused radiation beam. According to the invention, in the step of directing, the radiation beam is moved in at least two dimensions, using at least one tunable mirror, so that melting lines are formed. The step of supplying energy is synchronized with the step of directing to obtain melting lines arranged in a predefined pattern on the processing area. The distribution of the energy density supplied to the processing area is defined by implementing the energy supply recipe by densifying the melting lines in the pattern used, and/or changing the speed of the radiation beam movement, and/or changing the parameters of the laser source. Consequently, by using different recipes, one can adapt the energy distribution in time and space so as to prevent the formation of deposits and pits, and moreover the shape of the processing area can be arbitrary, with the recipe being adapted individually thereto.

Preferably, the processing area and/or the surface of the ultrasonic element are monitored by performing an image acquisition step with an imaging system directed at the processing area. Image analysis allows one to select the recipe according to the course of the process. This can be done manually or automatically.

Preferably, the step of supplying energy and the step of directing are performed with a control system that further performs the image acquisition step of an image originating from the imaging system and an image processing step to determine the degree of consumption uniformity. Such a solution facilitates the automation of the adaptation of the recipe to the course of the process.

In the image processing step, the locations of solidified material deposits and/or pits are preferably identified, which facilitates the selection of areas where the energy density should be increased or decreased.

Preferably, the power density distribution on the surface of the workpiece material is changed so that the power density is increased in areas identified as deposits and decreased in areas identified as pits. This effect can be achieved by changing the focus sweeping parameters or by changing the laser source parameters.

Preferably, the scanning pattern is selected to modify the pattern of melting lines in the processing area based on the location of deposits and/or pits identified in the camera image. In particular, increasing the energy density by densifying the melting lines in the area of deposits enables their successive elimination.

Alternatively, the radiation source power is increased as the beam passes through sub-areas of the processing area in which deposits have been identified. This results in thicker melting lines and the material is consumed faster and spreads better on the surface of the sonotrode tip. A similar effect is achieved by reducing the beam sweep speed in the melting lines. Advantageously, when the beam passes through sub-areas in which pits have been identified, the radiation source power is reduced or the sweep speed is accelerated.

Preferably, the beam scanning pattern is selected to provide a reduced spacing between the melting lines located in the areas corresponding to identified deposits and/or the spacing between the melting lines is increased in the areas corresponding to identified pits.

Preferably, in the image processing step, an artificial neural network trained to identify deposits and/or pits is used. Preferably, in the laser or electron atomization process, a welding camera image segmentation technique is used to identify deposits and/or pits.

Preferably, in the step of directing, control signals for the at least one tunable mirror are provided with an aid of artificial neural network trained to remove deposits and/or avoid pits. The neural network advantageously is trained on the basis of a sequence of images recorded during manual control by the operator providing data classifying image areas as deposits and/or pits. Preferably, priorities are set according to which the scanning area with laser is carried out and image processing models are used with real-time object detection and segmentation, trained on the basis of labeled photos from processes supervised by operators trained in the field of ultrasonic atomization.

A device for processing material by means of ultrasound according to the invention comprises an ultrasonic source, an ultrasonic element connected to the ultrasonic source, and a focused radiation source adapted to heat and melt material processed by a radiation beam. The device further comprises a working chamber, comprising at least partly the ultrasonic element connected to the ultrasonic source. The device further comprises a system for feeding the workpiece material to the ultrasonic element, and a source of radiation focused into at least one beam directed at the processing area for melting the workpiece material. According to the invention, the device further comprises a beam directing system comprising at least one tunable mirror onto which the radiation beam is incident for directing and moving the radiation beam within the processing area, and a control system connected to the directing system. The directing system is arranged in the radiation beam between the radiation source and the processing area. The control system is adapted to send control signals to the directing system to obtain at least one predefined scanning pattern of the radiation beam. The solution with a movable mirror enables high sweep speeds and great freedom in selecting the scanning pattern and shape of the processing area.

Preferably, the device comprises an imaging system connected to the control system.

The directing system is advantageously a galvo scanner. Galvo scanners are adapted to direct the beams and move them in a precisely defined manner. By using a galvo scanner, it is possible to arbitrarily direct the beam with sufficient speed in accordance with the predefined scanning pattern and energy supply recipe.

Preferably, the device comprises the imaging system connected to the control system. This enables monitoring of the processing area and the sonotrode surface and adequate modifications of the scanning pattern.

The control system is advantageously adapted to automatically convert an image originating from the imaging system into a control signal for beam sweeping. Thanks to this, the device can operate without human intervention and a correction for uneven consumption can be made earlier and without interrupting the work.

The device preferably includes a communication system for transmitting images from the control system and programming the control system. With this solution, data from the device can be used to develop better image analysis algorithms and select better scanning pattern. In particular, the centrally collected data can be used to centrally train algorithms, process images, and control the scanning pattern based on machine learning.

The computer program product according to the invention includes instructions for the control system in the device according to the invention to cause the method according to the invention to be performed.

A device for processing material by means of ultrasound according to the invention comprises an ultrasonic source, an ultrasonic element connected to the ultrasonic source, and a focused radiation source adapted to heat and melt material processed by a radiation beam. The device further comprises a working chamber, in which the ultrasonic element connected to the ultrasonic source is at least partially located, a system for feeding the workpiece material to the ultrasonic element, and a source of radiation focused into at least one beam directed at the processing area on a sonotrode for melting the workpiece material. According to the invention, the device further comprises a beam directing system comprising at least one tunable mirror onto which the radiation beam is incident for directing and moving the radiation beam within the processing area, and a control system connected to the directing system. The directing system is arranged in the radiation beam between the radiation source and the processing area. The control system is adapted to send control signals to the directing system to obtain at least one predefined scanning pattern of the radiation beam. The solution with a movable mirror enables high sweep speeds and great freedom in selecting the scanning pattern and shape of the processing area.

Preferably, the device comprises an imaging system connected to the control system. This enables monitoring of the processing area and the sonotrode surface and adequate modifications of the scanning pattern.

The directing system is advantageously a galvo scanner. Galvo scanners are adapted to steer the beams and move them in a precisely defined manner. By using a galvo scanner, it is possible to arbitrarily direct the beam with sufficient speed in accordance with the predefined scanning pattern and energy supply recipe.

The control system is advantageously adapted to automatically convert an image originating from the imaging system into a control signal for sweeping the beam. Thanks to this, the device can operate without human intervention and a correction for uneven wear can be made earlier and without interrupting the work.

The device preferably includes a communication system for transmitting images from the control system and programming the control system. With this solution, data from the device can be used to develop better image analysis algorithms and select better scanning pattern. In particular, the centrally collected data can be used to centrally train algorithms, process images, and control the scanning pattern based on machine learning.

The computer program product according to the invention includes instructions for the control system in the device according to the invention to cause the method according to the invention to be performed.

### Problem solution

The solution to the problem is a method of ultrasonic processing of the workpiece material subjected to melting, in which the power density distribution in the processing area and the workpiece material can be arbitrarily shaped. Adjustment of the heat source parameters alone turned out to be insufficient, as did the methods used to direct the heat source. The solution turned out to be the use of laser beam sweeping with a mirror, which provided sufficient speed and precision to set arbitrary predefined scanning patterns, resulting in a pattern of melting lines, the densifying or spreading out of which enables effective shaping of the power density distribution. This approach allows for a proactive solution to the problem. First, the use of various variable patterns enables long-term averaging to some extent of pitting and deposit formation, which limits their harmfulness and size while maintaining an arbitrary size and shape of the processing area. Second, in the embodiment comprising a camera, the solution allows the scanning pattern to be selected so as to increase the power density at the location of deposit and reduce it at the location of pitting. Third, the use of a mirror enables high beam speeds, which translates into a smaller penetration depth and reduced deposit formation. Fourth, it enables optimal division of heat source exposure time between the ultrasonic element and the workpiece material, which results in higher process efficiency.

### Description of the drawing

The subject of the invention is shown in the embodiments in the drawing, in which Fig. 1 shows a block diagram of an embodiment of the device according to the invention, Fig. 2 shows a flowchart of an embodiment of the method according to the invention Fig. 3 shows a schematic image of the workpiece material, Fig. 4 shows a schematic image of the processed workpiece material with the lines of the beam scanning pattern,

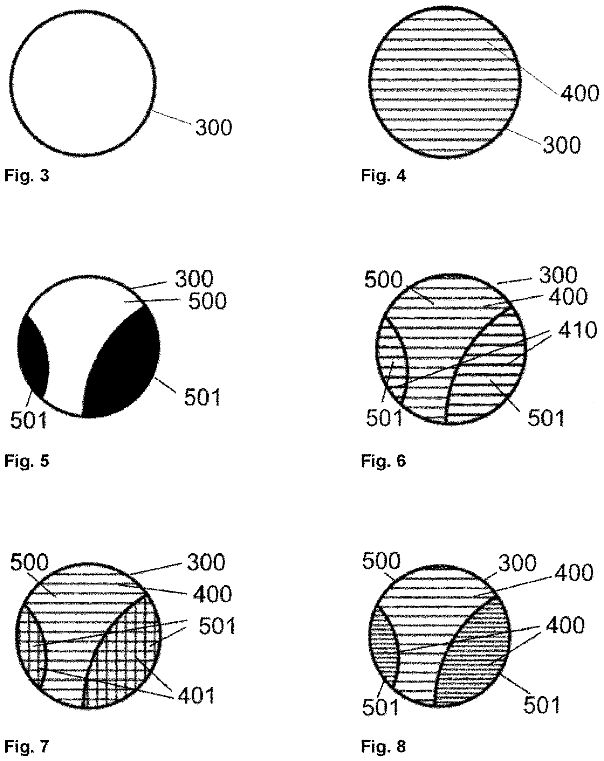

Fig. 5 shows a schematic image of the workpiece material with deposits of solidified material ejected from the pool,
Fig. 6 shows a schematic image of the processed workpiece material with lines of the laser beam scanning pattern,
Fig. 7 shows an example of changing the scanning pattern to remove deposits,

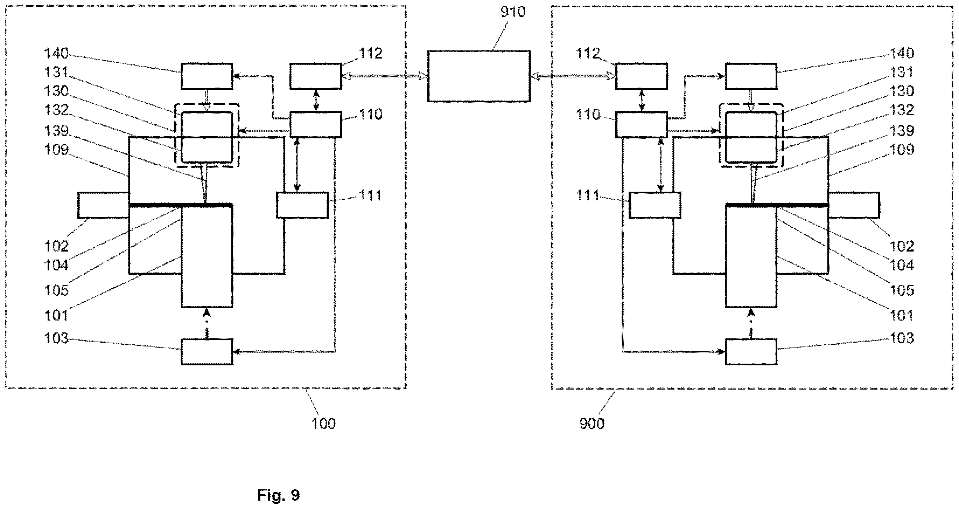

Fig. 8 shows an alternative example of changing the scanning pattern to remove deposits, and Fig. 9 shows a block diagram of the devices according to the invention enabling central machine learning.

### Description of the embodiments

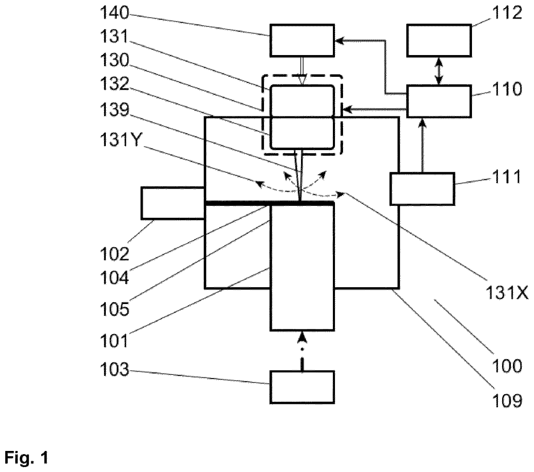

A block diagram of the atomization device constituting an embodiment of the device for processing materials according to the invention is shown in Fig. 1. The device is a comminuting atomizer comprising a working chamber **109,** in which the workpiece material **104** is locally heated and exposed to ultrasound.

Heating is associated with an increase in susceptibility to atomization by ultrasound, most often due to melting, which occurs in the case of metallic materials. The interaction of the laser beam with the material does not have to be limited to melting itself, which may accompany other phase transitions or chemical reactions induced by the laser beam.

A working chamber **109** with a laser sight-glass is used, which isolates the atomization process from atmospheric oxygen and protects the operator from laser radiation, and comprises the sight-glass which enables the laser radiation to penetrate the interior of the chamber. The chamber in this embodiment is designed as a cylinder with a diameter of 350 mm and is equipped with a cooling jacket and a sight-glass DN 150 (DIN 11850) made of quartz glass covered with an anti-reflective layer. The sight-glass is equipped with a nozzle steering the protective gas onto the sight-glass. This solution has proven convenient to use, but a person skilled in the art is able to routinely propose other solutions for the working chamber, including those of different dimensions and different laser feedthrough systems. A gas suction system can also be provided to obtain a vacuum in the working chamber and/or a system for feeding reactive gases.

In the working chamber **109** there is located, in whole or in part, an ultrasonic element **101,** which in the present embodiment is a sonotrode. On the sonotrode, the molten workpiece material is atomized with vibrations. In the present embodiment, a cylindrical sonotrode having a length of 120 mm and a diameter of 30 mm made of the same material as the workpiece material, i.e. titanium alloy Ti6Al4V, is used, and is tuned to a frequency of 40 kHz. Titanium alloy Ti6Al4V is a meltable material. The sonotrode constituting the ultrasonic element **101** is a solid cylinder and its working tip **105** is an area at the upper base of this cylinder. However, one can use sonotrodes with replaceable tips **105** fastened, e.g. by screwing, diffusion bonding, or welding.

A person skilled in the art is able to routinely propose other sonotrodes, including those made of other materials, and also actively cooled. In particular, the ultrasonic element can be implemented as a water-cooled sonotrode with a consumable tip **105.** An example of such a solution is known from the document WO2020230027A1 - the embodiment of Fig. 5. This is a particularly advantageous solution, but other sonotrodes known in the art can also be used. Composite sonotrodes resistant to high temperatures can also be used, see WO2022034517, the sixth embodiment.

Depending on the workpiece material, sonotrodes of different types can be used in two different ways. In the first case, a sonotrode has a consumable working tip **105** and is made of the same material, or a chemically similar material as the workpiece material. This ensures high process purity, but works well only with materials characterized by high weldability, e.g. Inconel 718, Ti6Al4V, or C103 alloy. In the second case, a sonotrode has a working tip made of a material with a higher melting point than the workpiece material, and in this case the workpiece material forms a thin film on the surface of the sonotrode tip. This layer does not melt completely, but partially solidifies on the sonotrode, forming between the molten workpiece material and the sonotrode surface a solid transition layer consisting of the workpiece material.

The invention is applicable in both cases described above, with the difference that the occurrence of deposits and pitting is a normal operating condition for the first type of sonotrode, while pitting in the second type of sonotrode is hardly to form, but results in a critical process error. In an extreme case, the sonotrode may contain on its surface both the workpiece material and the material with a higher melting point.

The device further comprises an ultrasound source **103** implemented as an ultrasonic signal generator with a piezoelectric transducer. In an embodiment, a generator with a nominal frequency of 40 kHz was used, which maintains a constant amplitude of the ultrasonic transducer with a capacitance of 5.6 nF, changing the frequency in the range of 39-41 kHz and tracking the change in the resonance frequency of the system. The change in the resonant frequency of the system is a normal phenomenon during operation and results from changes in the geometry of the sonotrode, e.g. pitting, changes in mechanical properties due to heating of the system by the supplied laser energy, or changes in the microstructure of the material, e.g. recrystallization.

The most useful vibrations for atomization purpose are those of frequencies from 16 kHz to 200 kHz, although the range from 20 kHz to 80 kHz gives the best results.

The workpiece material **104** in the form of a wire is fed to the chamber **109** by means of a feeding system **102** so that it contacts the tip **105** of the sonotrode **101.**

The feeding system **102** for the workpiece material **104** provides a batch material for the atomization process. The workpiece material may be powder, a wire, or other forms of material such as a rod or pellet. Other forms are also acceptable, and the selection of a feeder for the specific form of the workpiece material is a routine activity for a person skilled in the art. By increasing the laser radiation source power, it is possible to process a solid form with a larger mass of the element.

In the present embodiment, a four-roll feeder **102** of Ti6Al4V welding wire with a diameter of 2 mm is used. For other forms, a person skilled in the art can routinely select other solutions, e.g. a vibrating powder feeder, or a rod feeder, and can also propose hybrid solutions, e.g. using a plasma torch or an induction heater to preheat the material.

In the present embodiment, a laser radiation source **140** is used, which supplies energy to the system in the form of a radiation beam **139,** melting the workpiece material **104.** A Nd:YAG laser with a wavelength of 1064 nm, a beam quality of M2=1.6, and adjustable power with a maximum average value of 6 kW is used. Such a source allows one to melt 1 kg of titanium alloy Ti6Al4V in 7 minutes. A person skilled in the art is able to routinely select an alternative laser source, taking into account the required system efficiency, the reflectance of the workpiece material and its form. However, it should be noted that the indicated source performed best in tests with titanium alloys.

The workpiece material **104** is fed to the sonotrode tip **105,** on which a processing area **300** (shown in Figs. 3-7) is located, which is subjected to the radiation source **140.** Both the surface of the sonotrode tip **105** and the workpiece material **104** located in the area **300** are locally melted by means of the focused radiation beam originating from the radiation source **140.** The titanium alloy Ti6Al4V in the form of a wire **104** being processed fed from the feeder **102** replenishes loss in the sonotrode tip resulting from atomization.

The device according to an embodiment of the invention further comprises a beam directing system **131** for directing the beam **139,** comprising at least one tunable mirror ensuring that the beam is swept in at least two dimensions. A single mirror system can be used, but it is better to use a galvo scanner with at least two mirrors tiltable in orthogonal directions (pan and tilt). Multi-axis scanners with the ability to defocus the beam can also be used. A person skilled in the art is also able to propose additional optical elements forming the beam, such as a dynamic collimator for changing the focal position of the beam. The galvo scanner is an element of the beam forming and directing system **130,** which further includes an adjustable lens constituting an adjustable optical system **132** for forming the beam. Ready-made galvo scanner solutions are available, e.g. the IntelliWELD II FT galvo scanner manufactured by ScanLab.

The galvo scanner used in the present embodiment as the directing system **131** is a device for quickly moving a mirror or other optical elements in order to control the direction and position of the laser beam. The galvo scanner in the present embodiment contains two small mirrors, the so-called galvanometric mirrors mounted on hinges and tiltable in two substantially orthogonal directions. By applying small electric currents to the galvanometer mirrors, they can be tilted along one or both axes, deflecting the laser beam in different directions. The mirrors may include one or more working planes. In an embodiment, the scanner includes two mirrors adapted to a working aperture of the optical system of 30 mm and made of silicon carbide coated with a layer of gold. Over a small range of deflection angles, the mirrors, and consequently the beam, correspond to an almost Cartesian sweep of the processing area **300** over which the beam is moved in the directions **131X** and **131Y.** Various sweeping techniques are known in the art, which do not necessarily translate into a Cartesian coordinate system.

An improvement of this solution is the connection of multiple laser sources to one directing system or one laser source to multiple scanning systems via a beam switching system. It should be noted that the method according to the invention can be used regardless of the number of laser beam foci simultaneously supplying energy to the sonotrode or the workpiece material. Increasing the efficiency of the ultrasonic atomization process requires increasing the material melting rate, which requires increasing the power supplied to the system. Above about 6 kW of continuous power of fiber lasers common in the industry, the availability of beam directing systems based on glavo scanners becomes difficult due to the maximum power density that the mirrors can handle without destruction. Further increases in power are more easily achieved by multiplying the beam directing systems and laser sources. A person skilled in the art is able to propose a multi-scanner system based on solutions from the 3D printing industry.

Additionally, an optical system **132** is used in which in beam forming, a focusing lens is applied, which increases the laser power density on the sonotrode surface to adapt the laser to melt the material. High power density is important for fast melting, which translates into higher energy efficiency of the system. Higher heating rate means that with the same mass of melted material, the heat flux received by the sonotrode is smaller due to immediate atomization and ejection of liquid material. In an embodiment, an f-theta lens with a focal length of 650 mm and a diameter of 200 mm is used, which in combination with the beam parameters translates into the focus having a 0.5 mm diameter. A person skilled in the art is able to propose other solutions of the focusing lens, e.g. by integrating it with the sight-glass. The beam forming system can also be integrated with the galvo scanner in one device **130,** and in some solutions it is not required at all. The size of the liquid material pool depends on the diameter of the focus, the laser power and the beam scanning speed. At low beam speeds, the liquid metal pool has a greater depth than width, which is an unfavorable phenomenon during ultrasonic atomization, as it leads to the formation of pits, especially if the power density exceeds the vaporization threshold of the workpiece material and a vapor channel (a keyhole) is formed. A routine activity of a person skilled in the art is to select such parameters of the focus, the beam power and the beam speed that the workpiece material is melted, but does not evaporate.

The device according to the invention with beam scanning has turned out to be unexpectedly advantageous in a configuration in which both the sonotrode tip **105** and the melted material **104** are subjected to the laser. The influence of different materials on the heat distribution in such a configuration is difficult to predict and model. The use of the beam-sweeping scanner enables experimental selection of the energy supply recipe for the disturbances introduced by the workpiece material **104** at the point of its application to the tip **105** of the sonotrode **101.** Including the point of application of the workpiece material **104** to the processing area **300** in the scanning pattern improves the material replenishment mechanism on the sonotrode without the need for major configuration changes - only by densifying the scan lines to increase the energy density at the point of application of the workpiece material **104.** The invention also enables arbitrary shaping of the scanning area, which facilitates the use of sonotrodes with different tips in the same device.

Another advantageous effect is the creation of a laser pool with a small depth and large surface area without the use of high-power pulsed lasers. This allows one to control the particle size of the atomized powder by modifying the thickness of the liquid film. The thinner the liquid film on the surface of the tip **105** of the sonotrode **101,** the finer the atomized drops. This also allows avoiding the "drilling" effect known in the literature, such as S. Habib Alavi et al., "Ultrasonic vibration-assisted laser atomization of stainless steel," Powder Technology 2017 and S. Habib Alavi et al., "Melt expulsion during ultrasonic vibration-assisted laser surface processing of austenitic stainless steel," Ultrasonics 2015. A simplified energy balance during ultrasonic atomization assumes that the energy supplied by the laser source is reflected from the sonotrode surface (lost), or absorbed. The energy flux absorbed by the sonotrode is balanced by heat dissipation in the sonotrode **101** (cooled by liquid), and the heat flux of the ejected drops of the liquid workpiece material. Apart from the sonotrode's ability to absorb radiation, the energy efficiency of the process depends on how much energy is wasted on cooling the sonotrode and how much is released as drops of the liquid workpiece material. Rapid transfer of the workpiece material to the liquid state and a short residence time of the material in the liquid state limit the heat flux collected by the sonotrode and the coolant, and increase the heat flux received by the drops of the liquid workpiece material. As a result, the use of a system capable of rapid beam scanning increases the energy efficiency of the atomization process.

In the present embodiment, the device further comprises an optional imaging system **111,** implemented as a camera. The camera is placed in the working chamber or outside it on the observation window and is directed so as to record an image of the sonotrode and the workpiece material **104** located on or above the sonotrode. The camera may be equipped with a set of filters protecting against laser radiation, preferably the camera is equipped with a logarithmic matrix with a wide dynamic range above 140 dB. Such a matrix facilitates automatic image segmentation and identification of deposits and pits. In the present embodiment, the XIRIS XIR 1100 camera is used. The imaging system is not necessary for carrying out the method according to the invention, but it facilitates the use of more advanced variants thereof, in which the beam scanning pattern adapts to deposits and pits on the sonotrode monitored by means of the camera. Such a solution also enables the use of a number of techniques for preventing deposits formation and pitting using object detection and segmentation models in real-time image processing and machine learning algorithms trained on images of processing areas **300.**

The beam directing system **131,** the imaging system **111,** and the radiation source **140** are connected to the control system **110.** The control system **110** is implemented as a Beckhoff C6640-0060 industrial computer. Additionally, a communication system **112,** e.g. an LTE modem or an Ethernet adapter, can be connected to the control system **110.** The control system **110** is adapted to receive an image from the imaging system **111,** and to provide control signals for the radiation source **140** (power control, triggering, optionally pre-forming the beam) and to provide control signals for the beam forming and directing system **130,** and in particular for the mirrors of the directing system **131** and the optical system **132.**

Additionally, input/output devices can be connected to the control system **110** for displaying the image to the operator and receiving signals for setting the scanning pattern or manual control signals from the operator.

A further improvement consists in connecting the control input of the ultrasonic system **103** to the control system **110.** This makes it easy to input the scanning patterns designed to remove the deposits and pits, and to switch off vibration when scanning according to these patterns. Once the surface of the working end of the sonotrode is suitably smooth, normal operation can be resumed. This is particularly advantageous in the case of significant defects in the sonotrode, because without the ultrasound, the procedure described above resembles surface regeneration by laser surfacing.

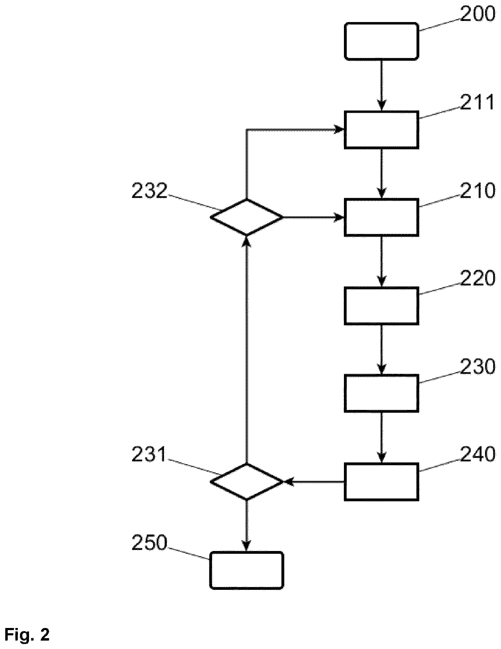

The method according to the invention is most easily implemented using the device according to the invention. In the embodiment discussed below, the method of ultrasonic processing of the workpiece material **104** is carried out by subjecting the workpiece material **104** to atomization, i.e. fragmentation into fine particles. The flow chart is shown in Fig. 2.

Before the processing starts in the preliminary step **200,** the atmosphere in the working chamber is replaced with a working atmosphere and the protective gas starts to be blown onto the laser sight-glass. The composition of the atmosphere is selected according to the workpiece material and may be, for example, nitrogen, argon, or helium. The use of helium as the shielding gas for processing titanium alloys is particularly advantageous, because it minimizes material expulsion from the laser pool. A person skilled in the art is able to select a suitable shielding gas for the specific workpiece material in order to limit expulsion and resulting deposit formation, or to propose a reactive gas for carrying out desired chemical reactions during atomization of the workpiece material. Then, the sonotrode is excited by means of an ultrasonic transducer. The vibration amplitude is set to exceed the atomization threshold of the workpiece material **104,** in the case of Ti6Al4V alloy and a frequency of 40 kHz, this is 20 µm, and the radiation source **140,** the beam scanner **131** in the beam forming and directing system **130** and the feeding system of the workpiece material **104** are activated.

Then, the surface of the tip **105** of the sonotrode **101** is melted by a beam **139** of laser radiation **140** moving in a scanning motion. Techniques for selecting beam scanning parameters are known in the art of 3D printing and include selecting a scanning pattern to form the proper pattern and spacing of the melting lines and laser power at the individual scanning points. In the present embodiment, the sonotrode was scanned with parallel lines with a line spacing of 0.2 mm and a beam speed of 1000 mm/s and a power of 4 kW. With the given parameters, the entire processing area **300,** here being the entire base of the sonotrode tip **105,** is scanned in less than 0.5 s. A significant improvement in the operation of the atomizer compared to the solution according to EP4000763 was observed even when the movement of the beam was at a speed of 100 mm/s, as in the state of the art solution it was not possible to effectively cover the processing area with melting lines due to the inertia of the laser head not containing mirrors.

The workpiece material **104** is simultaneously subjected to ultrasonic vibrations by means of the vibrating ultrasonic element **101,** and melted using the focused radiation source **140.**

Using ultrasound, the molten material is atomized and separated from the sonotrode. At the same time, the feeding system **102** of the workpiece material **104** replenishes the atomized material. In the present embodiment, the feeding system **102** of the 2 mm diameter wire operates at a feed speed of 20 mm/s.

In step **211,** the initial parameters of the recipe are set, including the scanning pattern of the beam **139.** Melting comprises performing, simultaneously or alternately, the step of directing **210** the radiation beam **139** originating from the radiation source **140** toward a specific location in the material **104** being melted, and the step of supplying energy **220** according to the beam scanning pattern to obtain a pattern of melting lines in the processing area **300.** The melting lines may merge into a larger molted material pool to obtain a pool of molted material **104,** or the pool may move in accordance with the movement of the focused radiation beam **139.**

The steps of directing **210** and supplying energy **220** may be performed as alternating steps or simultaneously. In the case of pulsed lasers, the distinction between step operation and continuous operation is essentially blurred.

Good atomization effects were obtained when the parameters of the radiation beam **139** were set in the step of supplying energy **220** so that the size of the pool was 5 mm² or even smaller. Moving such a small pool according to the scanning pattern significantly reduces deposits and pits even without adaptation and introducing changes to the scanning pattern.

In the present embodiment of atomization of a Ti6Al4V welding wire with a diameter of 2 mm, the beam was focused to a size of 500 µm, the power was set to 4 kW, and the wire was melted in such a way that the laser beam swept the sonotrode for 20% of the cycle and melted the tip of the wire made of the workpiece material **104** fed from the feeding system **102** for 80% of the cycle.

In another embodiment, a similar system was used, with a difference in that the sonotrode was made of pure tungsten with a diameter of 20 mm and the workpiece material had been a composition of Nb3Si in the form of a rod with a diameter of 10 mm. It should be noted that the material was fed in a cyclic manner, because the workpiece material being melted formed drops with a diameter of about 5 mm, which fell on the sonotrode surface at uneven time intervals. The power of the beam when incident on the workpiece material was set to 6 kW and the scanning speed to 200 mm/s. The beam was being focused to a size of 200 micrometers on the material, and defocused to a size of 500 micrometers when directed on the tip **105** of the sonotrode and scanning speed of was 2000 mm/s, with the scanning pattern selected so that the laser beam swept the sonotrode for 50% of the cycle and melted the rod for 50% of the cycle. Reducing the laser focus diameter allowed one to increase the melting rate of the workpiece material, while increasing the focus diameter on the sonotrode prevented pitting. The time during which the beam scans the sonotrode surface and the workpiece material is selected depending on the sonotrode type, the thermal conductivity and melting point of the sonotrode material and the workpiece material, as well as on the form of the workpiece material and its feed rate. In a fully automatic variant, scanning parameters also depend on the selected and computed image model of percentage filing factor of sonotrode with atomized material executed in the program run by the controller for computing the model output data. For atomization, the material must be transformed into a liquid state and maintained in a liquid state on the sonotrode surface. The thicker the material (the form of a rod instead of a wire), the higher its melting temperature and the faster it is fed, the longer the beam should scan the surface of the workpiece material. Similarly, the higher the thermal conductivity of the sonotrode, the longer the beam should be directed at it in order to maintain the material temperature above the melting point. In the case of a sonotrode with very low thermal conductivity, e.g. titanium alloys, scanning of the sonotrode surface may be limited only to melting deposits, because such a sonotrode tends to accumulate heat on its surface, and heat removal from the workpiece material is negligible. This effect is particularly visible in the case of significant overheating of the workpiece material above the melting point. On the other hand, atomization on a tungsten sonotrode requires continuous heating of its surface by scanning with the laser beam, because otherwise the workpiece material on the surface solidifies. At the same time, the initial scanning time of the sonotrode surface and the workpiece material may be changed by the operator or the artificial neural network. The beam speed is selected mainly depending on the workpiece material, the sonotrode material, and the laser beam parameters. A person skilled in the art is able to select the laser beam speed so as to prevent the formation of a vapor channel (boiling of the material in the focus) by increasing the beam speed and reducing the beam power, or increasing the focus diameter. Preventing the formation of a vapor channel is important for preventing the formation of pits. The critical speed depends on the workpiece material and the sonotrode material. For example, for a focus of 500 um, power of 6 kW, and the Ti64 alloy, a vapor channel is formed below the beam speed of about 1000 mm/s, and for tungsten with the same parameters, about 50 mm/s. Reducing the focus diameter increases the beam speed limit at which a vapor channel does not form. At the same time, in the case of melting the workpiece material, the formation of a vapor channel is not a negative effect, because it does not cause uncontrolled expulsion of the material, and increases the absorbency in the pool, which is why lower beam speeds can be used when melting the workpiece material.

In the step of directing **210,** the radiation beam **139** is moved in two dimensions, using at least one tunable mirror **131** for even consumption of the workpiece material **104.** Moving the beam using the means known in the art from the European patent application EP4000763 has proven to be a non-trivial task. First, moving the entire laser or laser head is not very precise, and second, it has proven to be too slow. Speed and acceleration needed to effectively cover the surface with melting lines are difficult to achieve when the entire optical system is moving, and adaptation is extremely difficult. Finally, during the exposure of the workpiece material **104** to ultrasound, there are random ejections of molten material that solidifies into deposits, and consequently the consumption may be uneven despite even sweeping of the entire processing area with the radiation beam **139.**

Various methods known in the art for covering the processing area with melting lines with a focused radiation source and various methods for directing the beam originating from the radiation source can be used. An important body of knowledge in this area is provided by techniques from the field of welding and 3D printing of metals. A beam steering technique that is advantageous for the present invention is the technique described in patent document US1 1 148205B2. It comprises separation of melting lines in order to reduce heat accumulation in the workpiece material. It has been found that this procedure alone allows one in some cases to reduce the deposits formation during atomization. In turn, a method of oscillating the laser beam focus in order to introduce intensified mixing of liquids in the laser pool is known from patent document US10888956B2. Other useful techniques are disclosed in Catchpole-Smith S. et al., "Fractal scan strategies for selective laser melting of 'unweldable' nickel superalloys," Additive Manufacturing 15 (2017): 113-122. Moving the beam focus to cover a given area with melting lines, known in the field of CNC machines as lining and in 3D printing techniques as hatching, requires high accelerations, which is very difficult without the use of moving mirrors.

The use of the preferred imaging system **111** facilitates continuous monitoring of the uniformity of consumption of the surface of the sonotrode tip **105** of the ultrasonic element **101.** The imaging system **111** provides an image of the processing area **300** of the workpiece material **104** to the control system **110** in the image acquisition step **230.** The control system **110** can display the image of the processing area **300** of the workpiece material **104** on a display to the operator of the device, who can manually move the beam or set a different scanning pattern for the beam **139** via the control system **110.**

According to the invention, the exposure time of the beam **139** can be divided in a tunable and convenient manner between the sonotrode tip **105** and the workpiece material **104** being fed. The general principle of controlling the laser beam is to increase the energy density in the areas of the sonotrode tip **105** where deposits occur and on the workpiece material **104,** while the areas of the sonotrode where pits occur are processed with reduced energy density. The occurrence of deposits and pits are stochastic phenomena, but depending on the system there may be places predisposed to the occurrence of these phenomena. For example, in the case of a Ti6Al4V sonotrode, deposits usually occur on the periphery of the sonotrode, which allows the operator, or the control system **110** simulating his work, to start with scanning parameters such that the laser beam moves at a lower speed on the periphery of the sonotrode than in its center, which results in changes in the energy density delivered to the surface.

In another embodiment, before the processing starts, the atmosphere in the working chamber is replaced with an inert atmosphere and a protective gas starts to be blown onto the laser sight-glass. The composition of the atmosphere is selected depending on the workpiece material and may be, for example, nitrogen, argon, or helium. The use of helium as the shielding gas for processing titanium alloys is particularly advantageous, as it minimizes material expulsion from the laser pool, when the laser source and the laser beam scanner are started.

Then the sonotrode **101** is excited using the ultrasonic source **103.** The vibration amplitude is selected so as to exceed the material atomization threshold, in the case of the Ti6Al4V alloy and a frequency of 40 kHz it is 20 µm.

Then the sonotrode surface is melted by the laser beam moving in a scanning motion. The selection of scanning parameters is known in 3D printing techniques and includes the arrangement and spacing of the melting lines and the laser power. In the present embodiment, the sonotrode is scanned with parallel lines separated by 0.2 mm, with a beam speed of 4000 mm/s and a power of 4 kW. With the given parameters, the entire surface of the sonotrode is scanned in less than 0.5 s.

Then the ultrasonic source **103** is turned off, the sonotrode **101** stops vibrating and the feeding system **102** is started, feeding the workpiece material **104,** while the steering system **131** transfers the radiation beam **139** to the workpiece material **104,** replenishing the loss in the sonotrode **101** resulting from atomization. In an embodiment, the titanium wire is melted for 2 seconds with a power of 6 kW at a wire feed rate of 40 mm/s. The atomization and replenishment are then repeated sequentially. This mode allows one to increase the process efficiency by increasing the maximum feed rate and melting rate of the workpiece material. The workpiece material **104** is melted and falls onto the sonotrode, which does not vibrate, which makes it easier to permanently melt the workpiece material into the sonotrode surface.

The operator's actions can be facilitated by performing not only the image acquisition step **230** but also the image processing step **240** by means of the control system **110.** In the image processing step, appropriate techniques are performed to facilitate the detection of deposits and pits and if they are detected **232,** the recipe is modified before the next step of beam steering **210.** The image can be processed just to facilitate the detection of deposits and pits, or it can be segmented to directly identify deposits and pits.

After detecting **231** the stop criterion, e.g. the complete consumption of the material, or the interruption by the user, the procedure ends **250.**

The next step in automation is the software conversion of the segmented image into control parameters. As a result, almost the entire procedure shown in Fig. 2 can be performed automatically. In an embodiment, the control program was implemented in Python using the YOLOv8 model based on the PyTorch library. In the case of xiris cameras, the C++ language was also used. Data from the processes was prepared using tools for image labeling, which enables automatic detection of process events consisting in pitting and deposit formation.

Another optional device improvement which, allows the entire process to be performed automatically, consists in adapting the control system **110** and the ultrasound source **103** so that the ultrasound source **103** is controlled by the control system **110.**

In the initial step **200,** the control system **110** starts the pump (not shown in the drawings) and valves (not shown in the drawings) to replace the atmosphere in the working chamber **109** with an inert atmosphere. Then, the control system **110** starts the ultrasonic source **103** and excites the sonotrode **101.** The control system also starts the radiation source **140,** the directing system (scanner) **131** of the radiation beam **139** and the feeding system **102** of the workpiece material **104.**

Then, in the repeatedly performed directing and energy supplying steps **210** and **220,** the control system **110** executes a specific recipe, i.e. a specific scanning pattern of the melting lines **400** realized with the radiation beam **139** on the surface of the working tip **105** of the sonotrode **101.** The recipe must define the scanning method, e.g. a list of the laser beam positions over time. Additionally, it may include time-varying settings for laser power and beam focus, as well as other parameters influencing the shape of the processing area **300,** the distribution of energy density on the surface of the processing area **300,** and the changes in this distribution over time.

Then the camera records the image of the sonotrode and sends it to the control system **110** in the image acquisition step **230.** Fig. 3 shows a schematic image **300** of the sonotrode tip **105** before melting. Fig. 4 also shows the melting lines **400** left by the radiation beam **139** during the execution of the initial recipe imposing a linear beam scanning pattern.

Then, in the image processing step **240,** the control system **110** compares the image of the sonotrode tip surface with the reference and segments the image using at least two classes shown in Fig. 6 - the sonotrode surface **500** and the material expulsion - a deposit **501** (or a convex defect), and records the coordinates of the recognized classes. Additionally, a separate class can be used to label visible pits (not shown in the drawings).

According to the segmentation result, the control system **110** modifies the recipe to compensate for irregularities. It is essential to provide a higher energy density in an area of excess material (a deposit) and/or a lower energy density in an area of pitting, so that the modified recipe has higher energy density in the areas with a recognized material expulsion class (a convex defect) than in areas with a recognized sonotrode surface class. This can be achieved in various ways.

Fig. 6 shows schematically the processing area **300** with melting lines **400** left by the radiation beam **139** being swept according to the initial recipe giving an even power density in the sub-area **500,** and lines **410** resulting from sweeping the beam **139** with increased power density applied in the deposit sub-areas **501.** The increased power density can be effectively achieved by reducing the sweep speed in a given sub-area or by increasing the laser power.

Fig. 7 schematically shows the processing area **300** with melting lines **400** resulting from sweeping the radiation beam **139** with power density defined in the initial recipe in the sub-area **500,** and additional melting lines 501 resulting from additional orthogonal sweeping the beam **139** in the deposit sub-areas **501.**

Fig. 8 shows a schematic image of the sonotrode **300** with melting lines **400** resulting from sweeping the radiation beam **139,** wherein the power density defined in the initial recipe is applied to the sonotrode area **500** and the increased power density is applied to the deposit areas **501.**

The steps discussed may be automatically repeated multiple times during the atomization process to automatically ensure even consumption.

A person skilled in the art, having familiarized himself with the present description, is able to routinely propose various scanning patterns and methods for densifying the supplied power. A person skilled in the art may also propose other techniques for identifying at least one area distinct from the normal surface, in particular a deposit or pitting.

Machine learning algorithms may be used both at the step of classifying the sonotrode areas, deposits, and at the step of changing the recipe.

In the case of classification of deposits and pits, the neural network is trained based on the areas classified by the operator.

Using classification before and after the pattern change, it is possible to obtain training of a second network supporting the process of changing the recipe. In an embodiment, a script written in Python using the YOLOv8 model based on the PyTorch library was used. The data was prepared using tools for image labeling. In particular, the open-source project labelme was used, which provides all the necessary tools for labeling an image for segmentation and detection purposes.

In both cases, improving the network performance can be obtained by additionally training the networks by classifying their operation by operators, where the operator identifies deposits and pits, also taking into account other parameters of the atomizer system. The operator controls the process based on experience so as to avoid pitting (the condition of low series impedance of the ultrasonic system and low thermal drift), to maintain a wide pool of liquid metal while maintaining the wettability condition (pool concavity) and to limit the evaporation of particles in the laser beam. The deposit formation is easy to detect when the material does not move during vibration and is "matte".

By using the communication devices **112,** the training process can be scaled on a central server, based on data from different atomizing devices **100, 900** and classification by different operators. In such a configuration, the coefficients of the improved networks can be centrally distributed to achieve an improvement on all devices connected to the server. A block diagram of such a system with a first atomizing device **100** and a second atomizing device **900** is shown in Fig. 9. The server **910** collects data from both devices and then uses it to train the models that classify the state of the processing area and select recipes and scanning patterns. The improved models and network coefficients are then sent to the individual devices.

A significant facilitation in monitoring the surface of the sonotrode tip and identifying deposits and pits is the use of a dedicated lidar system as the imaging system **111.** Scanning the surface with a lidar results in not only a two-dimensional image, but also a height map.

It turned out unexpectedly that the lidar system can be integrated in the device using the same radiation source for imaging that is used for heating, but operating at a lower power; this requires a dedicated detection system and more complicated control system **110,** but allows one to obtain a 3D scanning effect without additional systems.

### Industrial applicability of the invention

The invention is applicable especially in the atomization of metals to obtain powders used in 3D printing. However, the solution presented is more general and suitable for meltable materials or those whose susceptibility to atomization increases with temperature. The device according to the invention enables the optimization of energy supply in the process of atomization of the material being melted and the use of modern software tools for this purpose. Good parameterization of the process facilitates the use of artificial intelligence.

## Claims

1. A method of ultrasonic processing of a workpiece material (**104**), in which the workpiece material (**104**) is simultaneously
subjected to ultrasonic vibrations, by means of a vibrating ultrasonic element (**101**), and
to melting, by means of a focused radiation source (**140**), wherein said melting comprises performing, simultaneously or alternately, following steps:
a step of directing (**210**) a radiation beam (**139**) originating from the radiation source (**140**) towards a specific location in a processing area (**300**) of the workpiece material (**104**) and/or the ultrasonic element (**101**), and
a step of supplying energy (**220**) to the processing area (**300**) by means of the focused radiation beam (**139**),
**characterized in that**
in the step of directing (**210**), the radiation beam (**139**) is moved in at least two dimensions, by means of at least one tunable mirror (**131**), so that a melting line is formed, and
the step of supplying energy (**220**) is synchronized with the step of directing (**210**) to obtain melting lines arranged in a predefined scanning pattern on the processing area (**300**), and
the distribution of the energy density supplied to the processing area (**300**) is defined by implementing an energy supply recipe realized by setting density of the melting lines in a scanning pattern, and/or changing a speed of the radiation beam movement, and/or changing parameters of the laser source.

2. A method according to claim 1, wherein the processing area (**300**) and/or the surface of the ultrasonic element (**101**) is monitored by performing an image acquisition step (**230**) with an imaging system (**111**) directed at the processing area (**300**).

3. A method according to claim 1 or 2, wherein the step of supplying energy (**220**) and the step of directing (**210**) are performed with a control system (**110**) that further performs the image acquisition step (**230**) of the image originating from the imaging system (**111**) and an image processing step (**240**) to determine a degree of uniformity of workpiece material consumption.

4. Method according to claim 1 or 2 or 3, wherein the image processing step (**240**) identifies locations of deposits (**501**) of solidified material and/or pits.

5. Method according to claim 4, wherein the scanning pattern is adapted to modify the pattern of melting lines (**400**) in the processing area (**300**) based on the location of deposits and/or pits identified in the camera image.

6. Method according to claim 5, wherein the power of the radiation source (**140**) is increased as the beam (**139**) passes through sub-areas (**501**) of the processing area (**500**) in which deposits have been identified.

7. Method according to claim 5, wherein the beam scanning pattern is adapted to provide a reduced spacing between the melting lines (**400**) located in sub-areas (**501**) corresponding to identified deposits, and/or an increased spacing between lines in areas corresponding to identified pits.

8. Method according to any one of claims 2 to 7, wherein the image processing step (**240**) comprises a use of an artificial neural network trained to identify deposits and/or pits.

9. Method according to any one of claims 2 to 8, wherein the step of directing (**210**) comprises a use of an artificial neural network trained to remove deposits and/or avoid pits to determine control signals for the at least one tunable mirror (**131**).

10. A device (**100**, **900**) for processing material (**104**) by means of ultrasound comprising an ultrasonic source (**103**), an ultrasonic element (**101**) connected to said ultrasonic source (**103**), and a focused radiation source (**140**) adapted to heat and locally melt workpiece material with a focused radiation beam (**139**), wherein
the device further comprises a working chamber (**109**) in which there is at least partially located said ultrasonic element (**101**) connected to the ultrasonic source (**103**),
a feeding system (**102**) for feeding the material (**104**) to the ultrasonic element (**101**),
**characterized in that** the device further comprises
a beam directing system (**131**) for directing the beam (**139**), comprising at least one tunable mirror onto which the radiation beam (**139**) is incident for directing and moving the radiation beam (**139**) over the processing area (**300**),
a control system (**110**) connected to the beam directing system (**131**), adapted to provide control signals to the beam directing system (**131**) to obtain at least one predefined scanning pattern of the radiation beam (**139**) within the area (**300**) processed by the beam (**110**).

11. Device according to claim 10, **characterized in that** it comprises an imaging system (**111**) connected to the control system (**110**).

12. Device according to claim 11, **characterized in that** the beam directing system (**131**) is a galvo scanner.

13. Device according to claim 12, **characterized in that** the control system (**110**) is adapted to automatically convert an image originating from the imaging system (**111**) into a control signal for sweeping the beam (**139**).

14. Device according to claim 13, **characterized in that** it comprises a communication system (**112**) for transmitting images from the control system and programming the control system.

15. A computer program product comprising instructions for the control system (**110**) in the device as defined in any one of claims 10 to 13 to cause the method of any one of claims 1 to 9 to be performed.
